# EUROPÄISCHE PATENTSCHRIFT

(11) **EP 0 424 666 B1**
(45) Veröffentlichungstag und Bekanntmachung des Hinweises auf die Patenterteilung: **03.11.1993**
(21) Anmeldenummer: 90118063.8
(22) Anmeldetag: 20.09.1990
(51) Int. Cl.: F02B 37/12

(54) **Abgasturbolader**
Exhaustgas-driven turbocharger
Turbocompresseur à gaz d'échappement

(30) Priorität: 27.10.1989 DE 3935822
(43) Veröffentlichungstag der Anmeldung: 02.05.1991
(73) Patentinhaber: Krupp MaK Maschinenbau GmbH, 24159 Kiel (DE)
(72) Erfinder: Heintze, Wolfgang, D-2300 Kronshagen (DE); Häfner, Reinhard, D-2307 Schwedeneck II (DE)
(74) Vertreter: Hansmann, Dierk, Dipl.-Ing.

(56) Entgegenhaltungen:
- EP-A- 0 208 248
- DE-A- 3 008 180
- DE-B- 1 174 107
- DE-C- 3 715 729
- GB-A- 384 155
- GB-A- 925 984
- GB-A- 2 189 870
- PATENT ABSTRACTS OF JAPAN vol. 6, no. 126 (M-142)(1004) 10 Juli 1982, & JP-A-57 52635 (HONDA) 29 März 1982

## Beschreibung

Die Erfindung bezieht sich auf einen Abgasturbolader mit einer Radialturbine und einer Turbinenleiteinrichtung zur Aufladung von Brennkraftmaschinen, wobei zwischen der Turbine und der Abgasleitung ein verstellbares Absperrelement für die Abgaszuführung in die Turbine angeordnet ist und in einem an ein Gasleitgehäuse anschließendes Gasströmgehäuse eine Abgasleitung über eine Trennwand in einen Nebenkanal und einen Hauptkanal aufgeteilt ist und diese Kanäle sich in der Turbine als umfangsseitig verlaufende Ringkanäle fortsetzen, die über eine weitere, radial verlaufende Trennwand gegeneinander abgeschlossen sind, welche sich vom Gasströmgehäuse bis zum Gasleitgehäuse erstreckt, in dem der Nebenkanal über das Absperrelement stromaufwärts stufenlos verschließbar ist und der Gasstrom definiert vom Nebenkanal zum Hauptkanal umleitbar ist.

Aus der DE-C-37 15 729 ist ein abgasturbolader-aufgeladener Verbrennungsmotor mit einer Axialturbine bekannt geworden, die im Konverter einen Steuerschieber umfaßt, der die Abgaszuführung mengenmäßig einstellt.

Weiterhin ist aus der GB-A-925 984 eine gattungsgemäße Ausbildung mit einer Radialturbine bekannt. Es besteht bei diesen Anordnungen das Problem, eine strömungsgünstige Ausbildung der unterteilten Abgaszuführung für alle Betriebszustände zu ermöglichen und dabei eine günstige Ansteuerung zu gewährleisten. Bei den bekannten Anordnungen sind Umlenkungen mit zusätzlichen relativ aufwendigen Baumaßnahmen verbunden, wobei Betriebsstellungen mit ungünstigen Strömungsverhältnissen entstehen.

Weiterhin ist nach der JP-A-57 52635 ein Kegelkörper als Absperrorgan eines Bypass-Ventils bekannt. Die Zuordnung und die Ausbildung ist nach Art und Zweck eine andere Gattung.

Aufgabe der Erfindung ist es, bei einer gattungsgemäßen Anordnung mit einer Radialturbine eine Luftversorgung des Verbrennungsmotors bei Teillast mit veränderter Drehzahl optimale thermodynamische Verhältnisse im gesamten Lastbereich einzustellen und dabei für alle Betriebszustände ein Absperrelement mit günstigen Strömungsverhältnissen zu schaffen.

Diese Aufgabe wird durch die Merkmale des Anspruchs gelöst.

Durch die Ausbildung des Absperrvorganges als Ventilkugel sind in jeder Betriebsstellung gute Strömungsverhältnisse gewährleistet.

Die Steuerung erfolgt vorzugsweise in Abhängigkeit von verbrennungsmotorseitigem Betriebsdruck, wie Ladedruck, Abgastemperatur in Abhängigkeit vom jeweiligen Betriebspunkt, entweder hydraulisch, pneumatisch oder auch elektrisch.

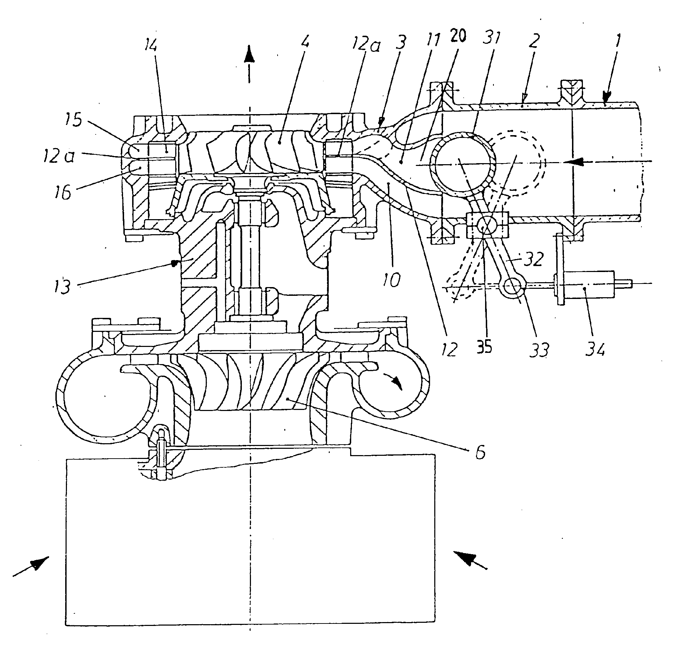

In der Zeichnung ist ein Ausführungsbeispiel mit einer Ventilkugel als Absperrelement schematisch dargestellt.

Die nicht näher dargestellte Brennkraftmaschine umfaßt ein Abgasrohrsystem 1, das in einem Gasleitgehäuse 2 einmündet und an das sich ein Gasstromgehäuse 3 anschließt, welches wiederum mit der Radialturbine 4 verbunden ist. Diese treibt über eine Welle 5 einen Verdichter 6 an, welcher durch einen Filter 7 Luft ansaugt und der Brennkraftmaschine zufördert.

Das Abgasrohrsystem 1 umfaßt gegebenenfalls mehrere Abgasleitungen, die im Gasstromgehäuse 3 zusammengeführt sind und einen Hauptkanal 10 und einen Nebenkanal 11 bilden, die durch eine Trennwand 12 unterteilt sind. Diese setzt sich in der Turbine 4 des Abgasturboladers 13 fort, in der Weise, daß sich in einem Turbinenleitring 14 zwei über eine an die erstere Trennwand 12 sich anschließende radiale Trennwand 12a weitergeführt ist und sich zwei, die Turbine 4 umfangsseitig umgebende Ringkanäle 15 und 16 ergeben.

Zur Steuerung ist ein Absperrelement als Ventilkugel 31 ausgeführt, die in der Einströmöffnung 20 des Nebenkanals 11 öffnend und verschließend im Gasleitgehäuse 2 schwenkbar gelagert ist. Hierzu ist diese Ventilkugel 31 mit einem Hebel 32 versehen, der am Gehäuse 2 gelenkig gelagert ist und mit seinem freien, nach außen durchgeführten Ende 3 mit einer motorischen Verstelleinrichtung 34 in Wirkverbindung steht.

Durch die Absperrung des Nebenkanals 11 über die Ventilkugel 31 wird der ankommende Gasstrom immer mehr gezwungen, in den Hauptkanal 10 einzutreten. Durch den hierdurch eingeleiteten vergrößerten Aufstau der vom Motor kommenden Abgase wird das Enthalphiegefälle vergrößert, die Mehrenergie wird im Abgasturbolader in einen höheren Ladedruck umgesetzt.

## Patentansprüche

1. Abgasturbolader mit einer Radialturbine (4) und einer Turbinenleiteinrichtung (2, 3) zur Aufladung von Brennkraftmaschinen, wobei zwischen der Turbine (4) und der Abgasleitung (1) ein verstellbares Absperrelement (31) für die Abgaszuführung in die Turbine (4) angeordnet ist und in einem an ein Gasleitgehäuse (2) anschließendes Gasströmgehäuse (3) eine Abgasleitung (1) über eine Trennwand (12) in einen Nebenkanal (11) und einen Hauptkanal (10) aufgeteilt ist und diese Kanäle (10 und 11) sich in der Turbine (4) als umfangsseitig verlaufende Ringkanäle (15,16) fortsetzen, die über eine weitere, radial verlaufende Trennwand (12a) gegeneinander abgeschlossen sind, welche sich vom Gasströmgehäuse (3) bis zum Gasleitgehäuse (2) erstreckt, in dem der Nebenkanal (11) über das Absperrelement (31) stromaufwärts stufenlos verschließbar ist und der Gasstrom definiert vom Nebenkanal (11) zum Hauptkanal (10) umleitbar ist, gekennzeichnet durch die Kombination folgender Merkmale:
a) der Nebenkanal (11) ist mit einer koaxial zum Abgassammelrohr (1) und zum Gasleitgehäuse (2) angeordneten Mündungsöffnung ausgeführt;
b) der Mündungsöffnung des Kanals (11) gegenüberstehend ist ein Absperrelement angeordnet, das eine Kugel (31) umfaßt, die mit einem Hebel (32) fest verbunden und der am Gasstromgehäuse (3) gelagert ist und die Kugel (31) etwa in Richtung einer Längsmittenachse des Gasstromgehäuses (2) verschwenkbar ist;
c) die Kugel (31) ist zentrisch im Abgasrohr (1) über den Hebel (32) in einer Öffnungs- und Schließstellung verstellbar über eine Verschwenkeinrichtung (34) gehalten;
d) mit seinem nach außerhalb des Gasströmgehäuses (3) geführten einem Ende (33) ist der Hebel (32) mit der Verschwenkeinrichtung (34) verbunden.

## Claims

1. Exhaust gas turbocharger having a radial turbine (4) and a turbine guide device (2, 3) for supercharging internal combustion engines, wherein an adjustable shut-off element (31) for the exhaust gas supply into the turbine (4) is disposed between the turbine (4) and the exhaust gas line (1) and, in a gas flow housing (3) adjoining a gas directing housing (2), an exhaust gas line (1) is divided by a partition wall (12) into a secondary channel (11) and a main channel (10) and said channels (10 and 11) continue in the turbine (4) as circumferentially extending annular channels (15, 16) which are closed off from one another by a further, radially extending partition wall (12a), which extends from the gas flow housing (3) as far as the gas directing housing (2), in which the secondary channel (11) is infinitely closable upstream by means of the shut-off element (31) and the gas stream may be diverted in a defined manner from the secondary channel (11) to the main channel (10), characterized by the combination of the following features:
a) the secondary channel (11) is constructed with an outlet opening which is disposed coaxially with the exhaust manifold (1) and with the gas directing housing (2);
b) disposed opposite the outlet opening of the channel (11) is a shut-off element comprising a ball (31), which is rigidly connected to a lever (32) and which is supported on the gas flow housing (3), and the ball (31) may be swivelled approximately in the direction of a longitudinal centre line of the gas flow housing (2);
c) the ball (31) is held centrically in the exhaust pipe (1) via the lever (32) so as to be adjustable in an opening and closing position by means of a swivel device (34);
d) the lever (32) is connected, by its one end (33) led towards the outside of the gas flow housing (3), to the swivel device (34).

## Revendications

1. Turbocompresseur à gaz d'échappement qui comporte une turbine radiale (4) et un dispositif de conduite (2,3) de la turbine, turbocompresseur destiné à la suralimentation de moteurs à combustion, dans le cas duquel un élément d'arrêt mobile et réglable (31) permettant l'apport des gaz d'échappement à la turbine (4) est monté entre la turbine (4) et le conduit à gaz d'échappement (1) et dans le cas duquel, dans un carter d'écoulement de gaz (3) faisant suite à un carter d'amenée de gaz (2), un conduit à gaz d'échappement (1) est divisé par une cloison (12) en un canal secondaire (11) et un canal principal (10), ces canaux (10 et 11) se prolongeant dans la turbine (4) sous la forme de canaux annulaires (15,16) suivant la périphérie de celle-ci, canaux annulaires qui sont fermés l'un par rapport à l'autre par une autre cloison (12a), cloison radiale qui s'étend du carter d'écoulement de gaz (3) jusqu'au carter d'amenée des gaz (2), dans lequel le canal secondaire (11) peut être fermé progressivement vers l'amont par l'élément d'arrêt (31), le courant de gaz étant ainsi amené à dévier de façon définie du canal secondaire (11) vers le canal principal (10), le turbocompresseur à gaz d'échappement étant caractérisé par la combinaison des particularités de réalisation indiquées ci-après :
a) le canal secondaire (11) présente une ouverture d'embouchure qui est coaxiale au conduit collecteur à gaz d'échappement (1) et au carter d'amenée de gaz (2);
b) en regard de l'ouverture d'embouchure du canal (11) se trouve un élément d'arrêt comportant un boulet (31) qui est fixé fermement à un levier (32), lequel est monté sur le carter d'écoulement de gaz (3), et le boulet (31) peut pivoter en suivant un axe médian longitudinal du carter d'écoulement de gaz (2):
c) le boulet (31) est maintenu au centre du conduit à gaz d'échappement (1) de façon à pouvoir être déplacé, à l'intervention du levier (32) par un dispositif destiné à provoquer son pivotement (34) pour être fixé dans une position d'ouverture et dans une position de fermeture;
d) le levier (32) est, par l'une (33) de ses extrémités, guidée vers l'extérieur du carter d'écoulement de gaz (3), relié au dispositif destiné à provoquer le pivotement (34).
